# EUROPÄISCHE PATENTANMELDUNG

(11) **EP 1 126 253 A1**
(43) Veröffentlichungstag der Anmeldung: **22.08.2001**
(21) Anmeldenummer: 00102990.9
(22) Anmeldetag: 14.02.2000
(51) Int. Cl.: G01H 1/00

(54) **Verfahren zur berührungslosen Erfassung von Schwingungen und Rotationsmaschine mit Schwingungserfassung**

(71) Anmelder: SIEMENS AKTIENGESELLSCHAFT, 80333 München (DE)
(72) Erfinder: Regnery, David, Dipl.-Ing., 47228 Duisburg (DE)

(57) **Zusammenfassung**

Die vorliegende Erfindung betrifft ein Verfahren zur berührungslosen Erfassung von Schwingungen von Schaufeln (14) an einem Rotor (12) in einer Rotationsmaschine (10), sowie eine Rotationsmaschine mit einem Gehäuse (11) und einem in dem Gehäuse (11) aufgenommenen Rotor (12), der mit einer Anzahl von in Umfangsrichtung nebeneinander liegenden Schaufeln (14) versehen ist. Erfindungsgemäß wird von den Schaufeln (14) oder einem die Spitzen der Schaufeln (14) verbindenden Deckband (30) abgegebene Infrarotstrahlung über mindestens einen Sensor (30) erfaßt und ausgewertet. Der Einsatz von Infrarotsensoren (18) ermöglicht eine Dauerüberwachung von Schaufelschwingungen bei erhöhter Temperatur.

## Beschreibung

Die vorliegende Erfindung betrifft ein Verfahren zur berührungslosen Erfassung von Schwingungen von Schaufeln an einem Rotor in einer Rotationsmaschine sowie eine Rotationsmaschine mit einem Gehäuse und einem in dem Gehäuse aufgenommenen Rotor, der mit einer Anzahl von in Umfangsrichtung nebeneinander liegenden Schaufeln versehen ist.

Eine derartige Maschine sowie ein derartiges berührungsloses Verfahren sind aus dem Aufsatz "A Review of Analysis Techniques for Blade Tip-Timing Measurements" von S. Heath und M. Imregun, ASME-Veröffentlichung 97-GT-218, vorgestellt auf der International Gas Turbine & Aeroengine Congress & Exhibition, Orlando, Florida, 02. bis 05. Juni 1997 bekannt. Dieser Aufsatz beschreibt eine berührungslose Schwingungserfassung mittels Lasern bei Einzelschaufeln ohne Deckblatt. Eine derartige berührungslose Schwingungserfassung ist auch aus der EP 0 710 355 B1 und der US 4,790,189 bekannt. Die Spitzen der einzelnen Schaufeln werden hierbei mittels Magnetsensoren erfaßt. Die US 4,413,519 beschreibt die Erfassung von Schaufelschwingungen mittels Radar.

Die bekannten Erfassungen weisen eine Reihe von Nachteilen auf. So liegen die magnetischen Eigenschaften eines Materials liegen nur innerhalb eines bestimmten Temperaturbereichs vor. Oberhalb der sogenannten Curie-Temperatur verschwinden die magnetischen Eigenschaften. Die Curie-Temperatur wird in einer Vielzahl von Anwendungen überschritten, beispielsweise in den vorderen Turbinenstufen an Gasturbinen. Die Erfassung der Schaufelschwingungen mittels Magnetsensoren ist an derart thermisch hochbelasteten Bauteilen nicht möglich. Die Erfassung über Radar ist von der Anwendungstemperatur her ebenfalls begrenzt und zudem sehr aufwendig.

Andere bekannte Lösungen wie beispielsweise das Aufbringen von DMS-Streifen sind nur kurzzeitig einsetzbar. Beim Aufbringen von DMS-Streifen besteht zudem die Gefahr, daß sich diese in Betrieb lösen und zu Beschädigungen der Rotationsmaschine führen.

Aufgabe der vorliegenden Erfindung ist es daher, eine Dauerüberwachung der Schwingungen von Schaufeln von Rotationsmaschinen auch bei erhöhter Temperatur bereitzustellen.

Erfindungsgemäß wird diese Aufgabe bei einem Verfahren der eingangs genannten Art dadurch gelöst, daß von den Schaufeln oder einem die Spitzen der Schaufeln verbindenden Deckband abgegebene Infrarotstrahlung über mindestens einen Sensor erfaßt und anschließend ausgewertet wird. Bei einer Rotationsmaschine der eingangs genannten Art ist erfindungsgemäß vorgesehen, daß das Gehäuse mit mindestens einem Sensor zur Erfassung der von den Schaufeln oder einem die Spitzen der Schaufeln verbindenden Deckband abgegebenen Infrarotstrahlung versehen ist.

Das erfindungsgemäße Meßprinzip unter Verwendung der Infrarotstrahlung ist nicht an die Curie-Temperatur gebunden. Es ist vielmehr für hohe und sehr hohe Temperaturen einsetzbar. Der erforderliche Infrarotsensor kann hochtemperaturbeständig ausgeführt werden. Es werden keine Elemente an den Schaufeln oder dem Deckband befestigt, die sich im Betrieb abnutzen oder lösen können, so daß die gewünschte Dauerüberwachung erreicht wird.

Vorteilhafte Ausgestaltungen und Weiterbildungen der Erfindung gehen aus den abhängigen Ansprüchen hervor.

Vorteilhaft wird die Infrarotstrahlung vor dem Eintritt in den Sensor über eine Blende konditioniert. Messungen mit Infrarotsensoren sind eine integrative Meßtechnik, da der Sensor stets über einen Meßfleck endlicher Größe ermittelt. Durch die Verwendung der Blende kann die Größe, Position und Form dieses Meßflecks an die jeweils herrschenden Randbedingungen angepaßt werden. Es wird somit zuverlässig die erforderliche Genauigkeit und Auflösung zur Erfassung der Schwingungen erreicht.

In vorteilhafter Ausgestaltung werden mehrere Sensoren verwendet und die von den Sensoren abgegebenen Signale zur Erfassung der Schwingungen miteinander verknüpft. Die Verwendung mehrerer Sensoren erhöht die Genauigkeit und ermöglicht eine bessere Schwingungserfassung.

Gemäß einer vorteilhaften Weiterbildung wird die Drehlage des Rotors über einen Signalgeber bestimmt und mit den Signalen des mindestens einen Sensors verknüpft. Hierdurch kann eine bestimmte Drehlage als Null-Lage des Rotors festgelegt werden, so daß Schwingungen in Umfangsrichtung einfach erkannt werden können. Der Signalgeber ermöglicht weiter eine Bestimmung der Drehzahl des Rotors.

Bei Verwendung eines Deckblatts wird dieses mit einer Markierung zur Kennzeichnung der Position der Schaufeln versehen. Die Erfassung der Schwingungen erfordert eine Erfassung des Vorbeiflugzeitpunkts der Schaufeln und damit eine Kennzeichnung der Position der Schaufeln gegenüber dem Deckband. Hierfür ist eine eindeutig der Schaufel zugeordnete Geometrie erforderlich, die bei freistehenden Einzelschaufeln stets gegeben ist. Wird ein Deckband verwendet, muß dieses mit einer Markierung versehen werden, um die erforderliche Zuordnung zu erreichen.

Vorteilhaft dient die Markierung gleichzeitig zur Erfassung von Schwingungen des Deckbandes. Durch eine Messung der von der Markierung des Deckbands abgegebenen Strahlung können somit direkt Schwingungen der Schaufeln erfaßt werden.

Bei der erfindungsgemäßen Rotationsmaschine ist zur Konditionierung der Infrarotstrahlung die Blende vor dem Eintritt in den Sensor vorgesehen. Die Blende kann als Schlitz- oder Lochblende, als Linse oder als Prisma ausgebildet sein. In Abhängigkeit von den Randbedingungen und den herrschenden Temperaturen wird die jeweils geeignete Blende ausgewählt.

Gemäß einer vorteilhaften Ausgestaltung ist die Blende über ein Einsatzblech mit einer Öffnung von den Schaufeln getrennt. Die Blende liegt somit nicht direkt im Fluidstrom durch die Rotationsmaschine und ist geschützt.

Nach einer vorteilhaften Weiterbildung ragt die Blende in die Öffnung des Einsatzblechs ein. Hierdurch wird der Abstand zwischen der Blende und den Schaufelspitzen beziehungsweise der Markierung auf dem Deckblatt verringert. Durch ein Einstellen des Abstands kann darüber hinaus die gewünschte Fokussierung der Blende erreicht werden.

In vorteilhafter Ausgestaltung ist der Sensor beabstandet zu der Blende angeordnet und mit dieser über eine Infrarotleitung verbunden. Der Sensor kann dann in Bereichen der Rotationsmaschine mit geringerer Temperatur angeordnet werden, so daß der Einsatzbereich nochmals vergrößert wird.

Nach einer vorteilhaften Weiterbildung ist der Sensor an einer Außenseite des Gehäuses angeordnet. Der Sensor ist damit von außen zugänglich und kann bei Verschleiß oder zur Anpassung an unterschiedliche Randbedingungen einfach ausgewechselt werden.

Vorteilhaft ist der Sensor mit einer Kühleinheit versehen. Diese Kühleinheit ist leicht anzubringen, wenn der Sensor an der Außenseite des Gehäuses angeordnet ist. Durch die Kühlung des Sensors wird der Einsatzbereich nochmals erweitert.

Bei Verwendung eines Deckbands ist dieses mit einer Markierung zur Kennzeichnung der Position der Schaufeln gegenüber dem Deckband versehen. In vorteilhafter Ausgestaltung weist diese Markierung Vorsprünge auf. Derartige Vorsprünge sind einfach herzustellen und gut zu erfassen.

In vorteilhafter Weiterbildung ist der Rotor mit mindestens einem Indikator zur Bestimmung seiner Drehlage versehen. Mit diesem Indikator und einem zugeordneten Signalgeber wird eine bestimmte Drehlage des Rotors als Null-Lage festgelegt. Ausgehend von dieser Null-Lage können die Drehzahl des Rotors sowie die Schwingungen in Umfangsrichtung bestimmt werden.

Nachstehend wird die Erfindung anhand von Ausführungsbeispielen näher beschrieben, die in schematischer Weise in der Zeichnung dargestellt sind. Bei gleichen oder funktionsidentischen Bauteilen werden hierbei durchgehend dieselben Bezugszeichen verwendet. Dabei zeigt:
Figur 1 einen Längsschnitt durch eine Rotationsmaschine;
Figur 2 einen Querschnitt durch die Rotationsmaschine gemäß Figur 1;
Figur 3 eine vergrößerte Darstellung der Einzelheit X aus Figur 2;
Figur 4 eine vergrößerte Darstellung der Einzelheit Y aus Figur 3;
Figuren 5 bis 7 unterschiedliche Ausgestaltungen einer Blende;
Figuren 8 und 9 einen Schnitt durch die Blende gemäß Linie VIII in Figur 4 in zwei Ausgestaltungen;
Figur 10 eine Ansicht ähnlich Figur 1 in zweiter Ausgestaltung; und
Figur 11 eine Draufsicht auf ein Deckband.

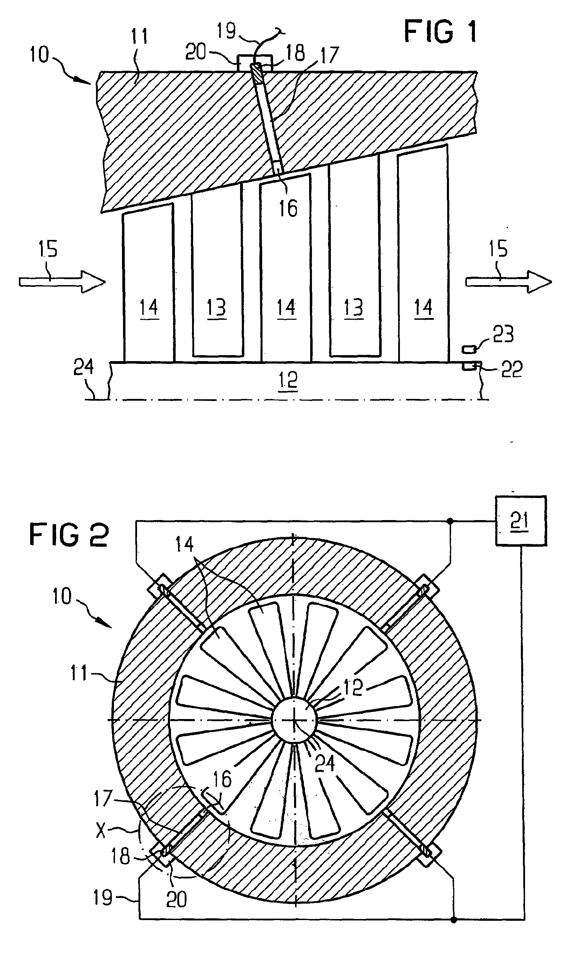

Figur 1 zeigt einen Längsschnitt und Figur 2 einen Querschnitt durch eine Rotationsmaschine in Form einer Turbine 10. Die Turbine 10 weist ein Gehäuse 11 und einen Rotor 12 auf. Das Gehäuse 11 ist mit Leitschaufeln 13 und der Rotor 12 mit Laufschaufeln 14 versehen.

Die Turbine 10 wird in Pfeilrichtung 15 von einem Fluid durchströmt, das den Rotor 12 in Drehung um eine Achse 24 versetzt. Das Fluid strömt hierbei an den Leitschaufeln 13 und Laufschaufeln 14 entlang. Zur Erfassung von Schwingungen der Laufschaufeln 14 sind eine Blende 16, ein Rohr 17 als Infrarotleitung und ein Infrarotsensor 18 mit einer Leitung 19 vorgesehen.

Der Infrarotsensor 18 ist beabstandet zu der Blende 16 angeordnet und mit dieser über das Rohr 17 verbunden. Im dargestellten Ausführungsbeispiel befindet sich der Infrarotsensor 18 an der Außenseite des Gehäuses 11 und ist mit einer Kühleinheit 20 zur Kühlung versehen. Die Temperatur des Infrarotsensors 18 liegt somit deutlich unter den Temperaturen im Inneren des Gehäuses 11 und unter den Temperaturen des Fluidstroms.

Zur Bestimmung der Drehlage des Rotors 12 sind ein Indikator 22 und ein Signalgeber 23 vorgesehen. Bei jeder Umdrehung des Rotors 12 wird von dem Signalgeber 23 ein Signal ausgegeben. Die Drehlage des Rotors 12 kann somit eindeutig bestimmt und mit den Signalen der Sensoren 18 verknüpft werden. Vorteilhaft wird die Drehlage, in der der Indikator 22 dem Signalgeber 23 gegenüberliegt, als Null-Lage für den Rotor 12 festgelegt. Weiter ermöglicht der Signalgeber 23 eine Bestimmung der Drehzahl des Rotors 12.

Es sind mehrere Infrarotsensoren 18 mit einer zugeordneten Blende 16 und einem Rohr 17 vorgesehen. Die Signale dieser Sensoren 18 werden über die Leitungen 19 einer Datenverarbeitungsanlage 21 zugeführt und dort mit dem Signal des Signalgebers 23 verknüpft.

Über die Blende 16 tritt Infrarotstrahlung in das Rohr 17 ein und gelangt zu dem Sensor 18. Die Intensität und Frequenz der Infrarotstrahlung hängt von den Randbedingungen im Inneren des Gehäuses 11 ab. Sie ändert sich insbesondere dann drastisch, wenn die Spitze einer Laufschaufel 14 an der Blende 16 vorbei streicht. Diese Änderung der Infrarotstrahlung wird von dem Sensor 18 erkannt und als Signal über die Leitung 19 abgegeben.

Die Blende 18 dient zur Konditionierung der Infrarotstrahlung vor dem Eintritt in den Sensor. Sie legt die Größe, Position und Form des Meßbereichs fest.

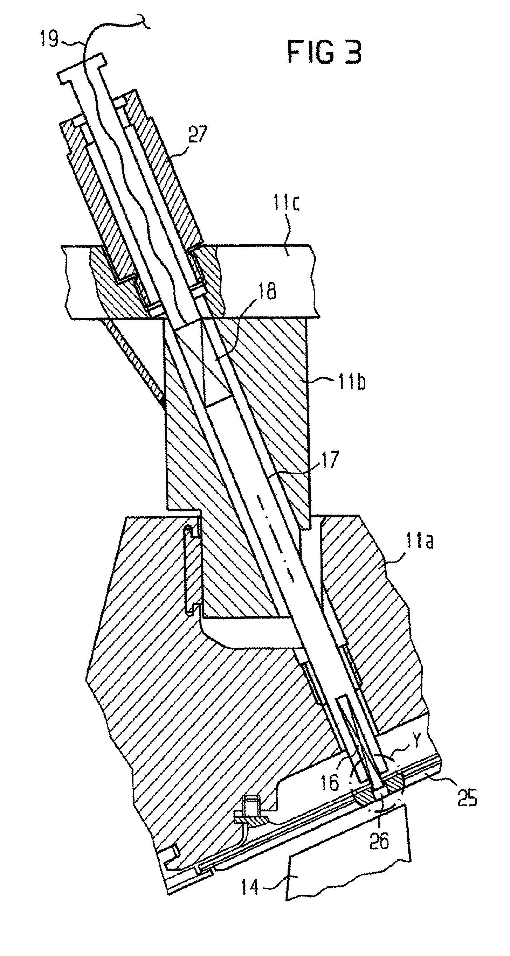

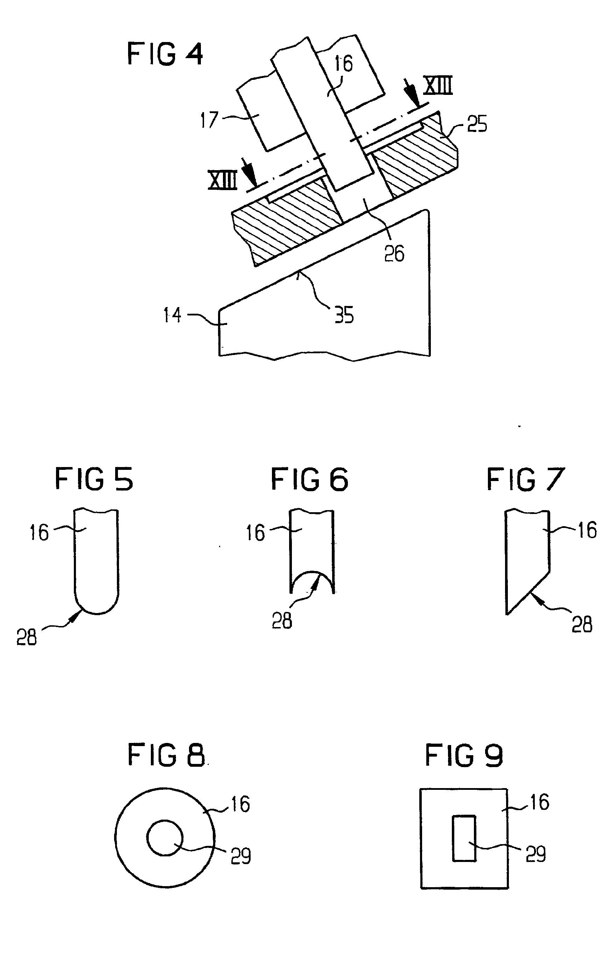

Die Figuren 3 und 4 zeigen eine vergrößerte Darstellung der Einzelheit X aus Figur 2 sowie der Einzelheit Y aus Figur 3. Die Blende 16 ist über ein Einsatzblech 25 mit einer Öffnung 26 von den Schaufeln 14 getrennt. Sie wird daher vor einer direkten Beaufschlagung mit dem die Turbine 10 durchströmenden Fluid geschützt. Zur Verringerung des Abstands zwischen einer Abschlußkante 35 der Laufschaufel 14 und dem vorderen Ende der Blende 16 ragt diese in die Öffnung 26 des Einsatzblechs 25 ein. Die Winkelposition der Blende 16 und des Rohrs 17 gegenüber der Abschlußkante 35 ist im dargestellten Ausführungsbeispiel etwa rechtwinklig. Die Blende 16 kann etwa in der Mitte der Laufschaufel 14 oder hierzu versetzt angeordnet werden. Die genaue Winkelposition und Anordnung hängen von den jeweiligen Randbedingungen ab.

Die Blende 16, das Rohr 17 und der Sensor 18 sind miteinander verbunden und über eine Hülse 27 an einem Gehäuseteil 11c befestigt. Das Gehäuseteil 11c wird über ein weiteres Gehäuseteil 11b an dem Gehäuseteil 11a gehalten. Die Berührfläche zwischen den Gehäuseteilen 11a, 11b ist relativ klein, so daß nur vergleichsweise wenig Wärme durch das Gehäuse 11 zu dem Sensor 18 übertragen wird. Der Sensor 18 arbeitet somit bei einer Temperatur, die bereits unterhalb der Temperatur im Inneren des Gehäuses 11 liegt. Durch die in Figur 3 nicht mehr dargestellte Kühleinheit 20 kann die Arbeitstemperatur des Sensors weiter abgesenkt werden.

Die in Figur 3 dargestellte Anordnung ermöglicht ein rasches und einfaches Auswechseln der Blende 16 zusammen mit dem Rohr 17, dem Sensor 18 und der Hülse 27. Der Sensor 18 kann bei Verschleiß rasch ersetzt oder zur Änderung des Meßbereichs ausgetauscht werden.

Die Blende 16 konditioniert die Infrarotstrahlung vor dem Eintritt in den Sensor 18. In Abhängigkeit von der Temperatur, der Geometrie der Schaufeln 14, der Position und Winkelstellung der Blende 16 sowie des Rohrs 17, der Drehzahl des Rotors 12 sowie weiteren Parametern wird eine jeweils geeignete Blende 16 ausgewählt. Unterschiedliche Bauformen für die Blende 16 sind in den Figuren 5 bis 9 dargestellt. Die Blende 16 kann als Linse mit konvexer oder konkaver Spitze 28 oder als Prisma mit Schrägfläche an seiner Spitze 28 ausgebildet werden. Selbstverständlich können auch andere Prismenformen zum Einsatz kommen. Auch das gegenüberliegende Ende der Blende 16 kann eine entsprechende Formgebung aufweisen. Es ist ebenfalls die Verwendung einer Lochblende oder einer Schlitzblende mit einer Öffnung 29 möglich. In Abhängigkeit von den Randbedingungen kann ebenfalls der Querschnitt der Blende 16 verändert werden.

Figur 8 zeigt eine Blende 16 mit rundem Querschnitt und Figur 9 eine weitere Ausgestaltung einer Blende 16 mit quadratischem Querschnitt.

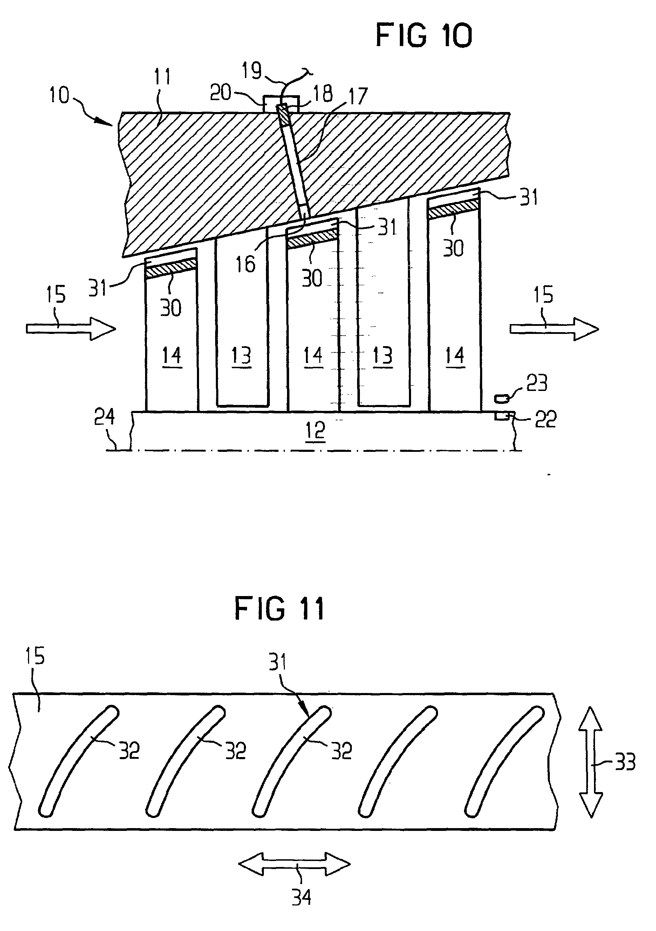

Figur 10 zeigt eine Ansicht ähnlich Figur 1 in zweiter Ausgestaltung. Die Lauf schaufeln 14 sind im Bereich ihrer Spitzen über ein Deckband 30 mit einer Markierung 31 verbunden. Die Markierung 31 ist erforderlich, um die geometrische Position der Lauf schaufeln 14 gegenüber dem Deckband 30 eindeutig festzulegen. Für eine Beschreibung der weiteren Bauteile wird zur Vermeidung von Wiederholungen auf oben stehende Ausführungen z Figur 1 verwiesen.

Figur 11 zeigt eine Draufsicht auf ein Deckband 15 in der Abwicklung. Die Markierung 31 besteht aus einer Reihe von Vorsprüngen 32. Im dargestellten Ausführungsbeispiel weisen diese Vorsprünge 32 im wesentlichen denselben Querschnitt wie die Laufschaufeln 14 auf. Es können selbstverständlich auch anders geformte Vorsprünge verwendet werden. Die Markierung 31 dient somit gleichzeitig zur Erfassung der Position der Laufschaufeln 14 gegenüber dem Deckband 30 und zur Erfassung von Schwingungen des Deckbandes 30.

Während der Drehung des Rotors streichen die Vorsprünge 32 an der Blende 16 vorbei. Bei diesem Vorbeistreichen ändert sich die in die Blende 16 eintretende und von dem Sensor 18 aufgenommene Infrarotstrahlung. Das Vorbeistreichen der Vorsprünge 32 an einer Blende 16 wird somit zuverlässig erkannt und kann zur Erfassung von Schwingungen der Lauf schaufeln 14 ausgewertet werden. Durch eine geeignete Ausgestaltung der Markierung 31 und Formgebung der Vorsprünge 32 können Schwingungen sowohl in Querrichtung 33 als auch in Umfangsrichtung 34 erfaßt werden.

Die erfindungsgemäß vorgesehene Erfassung mittels Infrarotsensoren 18 stellt ein Meßprinzip bereit, das auch bei hohen und sehr hohen Temperaturen einsetzbar ist. Der Sensor 18 kann beabstandet zu der Blende 16 in Bereichen mit geringerer Temperatur angeordnet und gegebenenfalls mit einer Kühleinheit 20 versehen werden. Es können somit Schaufelschwingungen im Rahmen einer Dauerüberwachung auch bei wesentlich erhöhten Temperaturen erfaßt werden.

## Patentansprüche

1. Verfahren zur berührungslosen Erfassung von Schwingungen von Schaufeln (14) an einem Rotor (12) in einer Rotationsmaschine (10), **dadurch gekennzeichnet,** daß von den Schaufeln (14) oder einem die Spitzen der Schaufeln (14) verbindenden Deckband (30) abgegebene Infrarotstrahlung über mindestens einen Sensor (18) erfaßt und anschließend ausgewertet wird.

2. Verfahren nach Anspruch 1, **dadurch gekennzeichnet**, daß die Infrarotstrahlung vor dem Eintritt in den Sensor (18) über eine Blende (16) konditioniert wird.

3. Verfahren nach Anspruch 1 oder 2, **dadurch gekennzeichnet**, daß mehrere Sensoren (18) verwendet werden und die von den Sensoren (18) abgegebenen Signale zur Erfassung der Schwingungen miteinander verknüpft werden.

4. Verfahren nach einem der Ansprüche 1 bis 3, **dadurch gekennzeichnet**, daß die Drehlage des Rotors (12) über einen Signalgeber (23) bestimmt und mit den Signalen des mindestens einen Sensors (18) verknüpft wird.

5. Verfahren nach einem der Ansprüche 1 bis 4, **dadurch gekennzeichnet**, daß das Deckband (30) mit einer Markierung (31) zur Kennzeichnung der Position der Schaufeln (14) versehen wird.

6. Verfahren nach Anspruch 5, **dadurch gekennzeichnet**, daß die Markierung (31) gleichzeitig zur Erfassung von Schwingungen des Deckbandes (30) dient.

7. Rotationsmaschine mit einem Gehäuse (11) und einem in dem Gehäuse (11) aufgenommenen Rotor (12), der mit einer Anzahl von in Umfangsrichtung nebeneinander liegenden Schaufeln (14) versehen ist, **dadurch gekennzeichnet**, daß das Gehäuse (11) mit mindestens einem Sensor (18) zur Erfassung der von den Schaufeln (14) oder einem die Spitzen der Schaufeln (14) verbindenden Deckband (30) abgegebenen Infrarotstrahlung versehen ist.

8. Rotationsmaschine nach Anspruch 7, **dadurch gekennzeichnet,** daß zur Konditionierung der Infrarotstrahlung vor dem Eintritt in den Sensor (18) eine Blende (16) vorgesehen ist.

9. Rotationsmaschine nach Anspruch 7 oder 8, **dadurch gekennzeichnet,** daß die Blende (16) als Schlitz- oder Lochblende, als Linse oder als Prisma ausgebildet ist.

10. Rotationsmaschine nach Anspruch 9, **dadurch gekennzeichnet**, daß die Blende (16) über ein Einsatzblech (25) mit einer Öffnung (26) von den Schaufeln (14) getrennt ist.

11. Rotationsmaschine nach Anspruch 10, **dadurch gekennzeichnet,** daß die Blende (16) in die Öffnung (26) des Einsatzblechs (25) einragt.

12. Rotationsmaschine nach einem der Ansprüche 9 bis 11, **dadurch gekennzeichnet,** daß der Sensor (18) beabstandet zu der Blende (16) angeordnet und mit dieser über eine Infrarotleitung (17) verbunden ist.

13. Rotationsmaschine nach Anspruch 12, **dadurch gekennzeichnet,** daß der Sensor (18) an einer Außenseite des Gehäuses (11) angeordnet ist.

14. Rotationsmaschine nach Anspruch 13, **dadurch gekennzeichnet,** daß der Sensor (18) mit einer Kühleinheit (20) versehen ist.

15. Rotationsmaschine nach einem der Ansprüche 7 bis 14, **dadurch gekennzeichnet**, daß das Deckband (30) mit einer Markierung (31) zur Kennzeichnung der Position der Schaufeln (14) gegenüber dem Deckband (30) versehen ist.

16. Rotationsmaschine nach Anspruch 15, **dadurch gekennzeichnet**, daß die Markierung (31) Vorsprünge (32) aufweist.

17. Rotationsmaschine nach einem der Ansprüche 7 bis 16, **dadurch gekennzeichnet**, daß der Rotor (12) mit mindestens einem Indikator (22) zur Bestimmung seiner Drehlage versehen ist.
